# EUROPEAN PATENT SPECIFICATION

(11) **EP 2 017 153 B1**
(45) Date of publication and mention of the grant of the patent: **07.03.2012**
(21) Application number: 07253468.8
(22) Date of filing: 31.08.2007
(51) Int. Cl.: B61F 19/02, B61F 19/04, B61D 15/06

(54) **Railway car with obstacle deflector**
Schienenfahrzeug mit Hindernisabweiser
Vehicule ferroviaire avec déflecteur d'obstacles

(30) Priority: 18.07.2007 JP 2007187504
(43) Date of publication of application: 21.01.2009
(73) Proprietor: Hitachi, Ltd., Chiyoda-ku Tokyo 100-8280 (JP)
(72) Inventor: Hayashi, Seiichi c/o Hitachi Ltd., IP Group, Tokyo 100-8220 (JP)
(74) Representative: Paget, Hugh Charles Edward

(56) References cited:
- EP-A- 1 106 467
- EP-A- 1 468 890
- EP-A- 1 582 428
- DE-C1- 19 720 329
- FR-A- 2 785 028

## Description

### BACKGROUND OF THE INVENTION

### Field of the invention

The present invention relates to a railway car having an obstacle deflector for eliminating obstacles on railway tracks, and is applicable to railway cars such as railroad vehicles, streetcars, electric trains of new urban traffic systems and monorail cars.

### Description of the related art

Japanese Patent Laid-Open Publications No. 2005-206006 (patent document 1), No. 2001-55141 (patent document 2) and No. 2003-137094 (patent document 3) disclose structures for eliminating obstacles on railway tracks. Patent documents 1 through 3 disclose an obstacle deflector disposed on a car body at a leading end portion of the railway car and positioned above the railway track for eliminating obstacles on the railway track.

The obstacle deflector disclosed in the above patent documents is a U-shaped member when viewed from above, wherein the U-shaped member is connected at multiple locations on a lower surface of an underframe. Further, the U-shaped member is connected at its rear portion with the underframe. The U-shaped member can also be V-shaped.

The obstacle deflector has an energy absorber disposed at a rear position on a rear surface at the center of the width-direction of the U-shaped member. When the U-shaped member collides against an obstacle, the energy absorber collapses in a bellows, absorbing the collision energy.

In the structure disclosed in patent documents 1 through 3, a U-shaped member is disposed on a lower surface of the underframe, and the U-shaped member is attached at plural locations on the underframe. Therefore, the U-shaped member is large-sized, and since the U-shaped member must be attached at plural locations on the lower surface of the underframe, the attaching operation becomes difficult.

EP 1582428 describes a railway car having a collision protector mounted below the underframe by two pins spaced in the travel direction. The forward pin is connected by a swinging arm to another pin which is connected by a transverse beam to collision absorption elements of the car.

### SUMMARY OF THE INVENTION

The object of the present invention is to provide an obstacle deflector on a railway car that has minimum influence on the underframe and car body when colliding against an obstacle, which is small-sized and can be disposed easily.

The above object is realized by a railway car having an obstacle deflector, as set out in claim 1.

According to the railway car of the invention, the impact load generated by an obstacle colliding against the obstacle deflection member is transmitted via the connecting mechanism to the underframe. Since the obstacle deflection member and the connecting mechanism is respectively connected via pins to the underframe, they constitute a link mechanism, according to which the underframe receives the given impact load as a simple axial force, and no flexural load is applied to the underframe. Thus, since there is no need for a guide mechanism for slidably supporting the connecting mechanism according to the present invention, the structures of the obstacle deflector and the railway car are simplified, the effect of the impact load to the underframe or the car body is simplified, and so the structure is advantageous.

Further according to the present invention, when the connecting mechanism is equipped with the distribution member and an energy absorber, the energy absorber absorbs the collision energy generated by the collision of an obstacle against the obstacle deflection member, and reduces the impact load transmitted to the underframe. Moreover, in an embodiment, when a relatively small load is applied on the obstacle deflection member, the energy absorber will not activate, but when a large load is applied, the energy absorber collapses in a bellows and absorbs the collision energy. Since the whole body of the energy absorber receives axial force only and does not receive bending moment, the energy absorber is crushed effectively and exerts maximum energy absorbing function.

### BRIEF DESCRIPTION OF THE DRAWINGS

FIG. 1 is a perspective view showing one embodiment of a railway car with an obstacle deflector according to the present invention;
FIG. 2 is a side view of the obstacle deflector illustrated in FIG. 1;
FIG. 3 is a cross-sectional view taken at line III-III of FIG. 2;
FIG. 4 is an enlarged plan view of portion IV of FIG. 3;
FIG. 5 is a cross-sectional view taken at line V-V of FIG. 4;
FIG. 6 is a cross-sectional view taken at line VI-VI of FIG. 5;
FIG. 7A is an explanatory view of the load and reaction force applied to the obstacle deflector of the railway car according to the present invention, and FIG. 7B is an explanatory view of the same according to a prior art example;
FIG. 8 is a view corresponding to FIG. 3 showing another embodiment of the present invention; and
FIG. 9 is a view corresponding to FIG. 6 showing yet another embodiment of the present invention.

### DETAILED DESCRIPTION OF THE PREFERRED EMBODIMENTS

The preferred embodiments of a railway car according to the present invention will be described with reference to the drawings.

### [Embodiment 1]

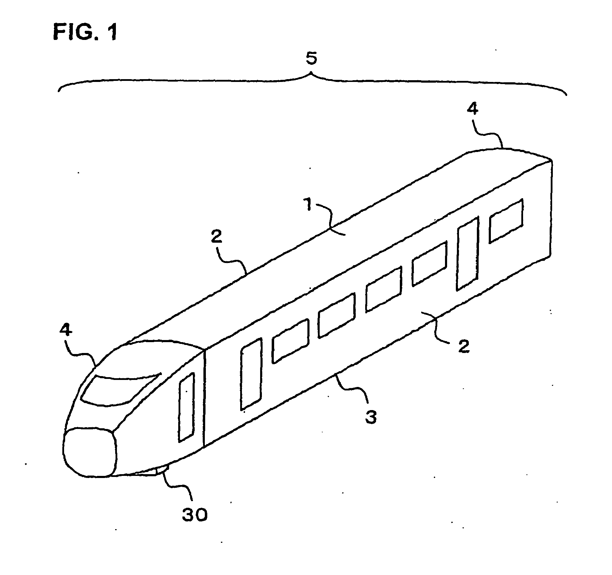

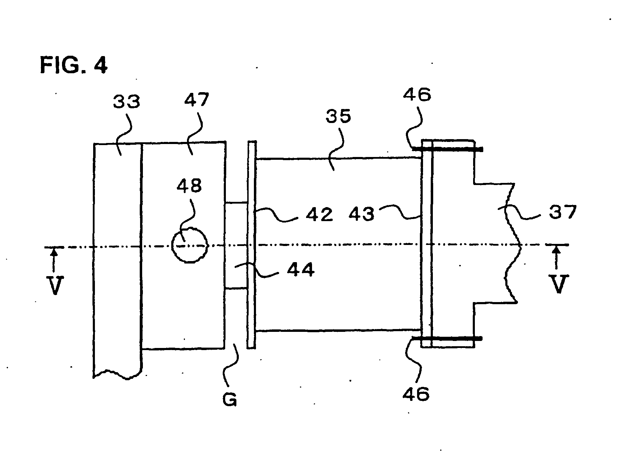

One preferred embodiment of the present invention will be described with reference to FIGS. 1 through 7. In FIG. 1, the railway car body structure 5 is composed of a roof structure 1 constituting an upper plane thereof, two side structures 2 and 2 constituting side walls thereof, an underframe 3 constituting a lower plane thereof, and two end structures 4 and 4 closing the longitudinal end faces of the car. The roof structure 1, the side structures 2 and 2, the underframe 3 and the end structures 4 and 4 are each composed by welding a plurality of extruded shape members. The extruded shape members constituting the roof structure 1, the side structures 2 and 2 and the underframe 3 are hollow shape members made of aluminum alloy, and the direction of extrusion thereof corresponds to the front rear direction of the railway car body structure 5. The extruded shape members constituting the end structures 4 and 4 are shape members with ribs formed of aluminum alloy, and the direction of extrusion thereof corresponds to the vertical direction of the railway car body structure 5. On the lower surface of an underframe 3 at the front portion in the longitudinal direction of the railway car body structure 5 is disposed an obstacle deflector 30 positioned toward the longitudinal direction.

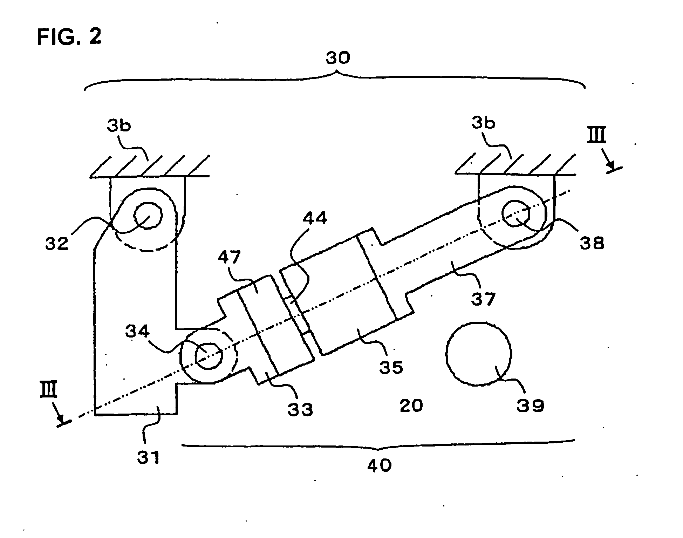

The obstacle deflector 30 is disposed on the lower surface 3b of the underframe of the car body. In FIG. 2, the front end portion of the obstacle deflector 30 is disposed as close to the front end portion of the car body as possible. An obstacle deflection member 31 at the front end portion is a high-strength member composed of a thick plate made of iron. The upper end portion of the obstacle deflection member 31 is suspended from the underframe 3 or a mounting hardware attached to the lower surface 3 of the underframe via pins 32 and 32. The pins 32 are arranged so that their axial direction corresponds to the width direction of the car body. The obstacle deflection member 31 extends along the width direction of the car body. The obstacle deflection member 31 is slanted so that when viewed from above, the front side is reduced in size from the center of the width direction toward the width-direction-ends. What is meant by the description that the obstacle deflection member is slanted so that its front side is "reduced in size" is that when the obstacle deflection member 31 is viewed from above, the member is pentagon-shaped with the center portion having the most thickness and its thickness being reduced gradually toward the ends.

When an obstacle collides against the obstacle deflection member 31, the obstacle deflection member 31 receives force in a direction to rotate the lower end of the obstacle deflection member 31 toward the rear direction around pins 32. There are two pins 32 disposed along the width direction of the obstacle deflection member.

Further, the obstacle deflector 30 comprises a connecting mechanism40includingadistributionmember33disposedparallel to the obstacle deflection member 31, two support members 47 and 47 attached to the distribution member 33, energy absorbers 35 and 35 connected via load transmitting shafts 44 and 44 to the support members 47 and 47, two rods 37 and 37 connected to the energy absorbers 35 and 35, and pins 38 and 38 connecting the rods 37 and 37 to the lower surface 3b of the underframe. The distribution member 33 is a high-strength member made of iron. The two sets of components each composed of the support member 47, the load transmitting shaft 44, the energy absorber 35 and the rod 37 disposed rearward from the distribution member 33 each constitute a parallel connecting unit.

What is meant by the term "parallel" is that the distribution member 33 is disposed in the width direction, similar to the obstacle deflection member 31.

The energy absorber 35 collapses and absorbs the collision energy when collision with an obstacle occurs.

The pin 32 is disposed at two longitudinal locations on an upper end of the obstacle deflection member 31 along the width direction. The axial direction of each pin 31 corresponds to the width direction.

The obstacle deflection member 31 and the distribution member 33 are connected via a single pin 34. The pin 34 is disposed at the center of the width direction between the obstacle deflection member 31 and the distribution member 33. The axial direction of the pin 34 corresponds to the width direction in FIG. 2, but it can also be disposed in the perpendicular direction.

The rods 37 and 37 are disposed on the lower surface 3b of the underframe via pins 38 and 38. The rods 37 and 37 are connected ratatably in vertical direction via pins 38 and 38. Thus, the obstacle deflector 30 realizes a link structure which is attached via pins 32 and 38 on the lower surface 3b of the underframe when viewed from the side direction with respect to the running direction of the vehicle.

The support members 47 and 47 (and energy absorbers 35 and 35 connected thereto) are connected to the distribution member 33 at equal distanced positions in the width direction from the pin 34.

The point of connection between the rods 37 and 37 and the lower surface 3b of the underframe (the horizontal and height positions of the pins 38 and 38) can be anywhere, but it is preferable that the pins 38 are positioned at corresponding positions and as distanced from the obstacle deflection member 31 as possible. This is preferable since when the obstacle deflection member 31 collides against an obstacle, the direction of impact force conducted via rods 37 and 37 to the underframe should be as close to the plane of the underframe as possible to reduce upthrust force. The rods 37 are crossed perpendicularly with axles 39 at positions above the axles 39 supporting the car body on the rails. The rods 37 are arranged to extend above the axles 39 with a distance therebetween preventing the rods 37 from coming into contact with the axles 39 even when air cushions (not shown) blow out.

The lower end of the obstacle deflection member 31 is positioned on an extended line of the connecting line connecting the pin 34 and the pin 38. If the extended line is positioned above the lower end of the obstacle deflection member 31, the load acting on the energy absorbers 35 becomes excessive considering the balance of load acting on the obstacle deflection member 31 at the time of collision with an obstacle, which is not preferable. Further, if the extended line is positioned below the lower end, the clearance between the distribution member 33 and the rail surface becomes excessively small and is not desirable, since the lower end of the obstacle deflection member 31 is positioned as close to the rail surface as possible. In this sense, it is preferable that the lower end of the obstacle deflection member is disposed on the above-mentioned extended line. Even though it is described that the obstacle deflection member 31 is positioned "on the extended line", a small variation in the vertical direction is permissible.

The energy absorbers 35 can adopt any structure, as long as they are capable of absorbing collision energy. One preferable example is an extruded shape member made of aluminum alloy, which collapses in a bellows with respect to the running direction when receiving impact load to absorb the collision energy.

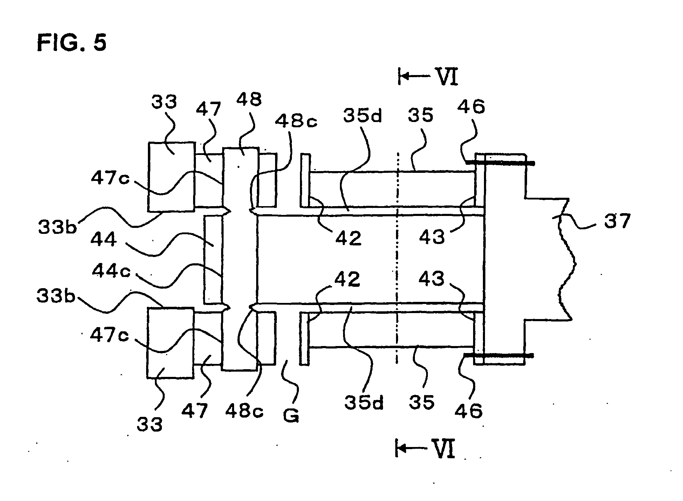

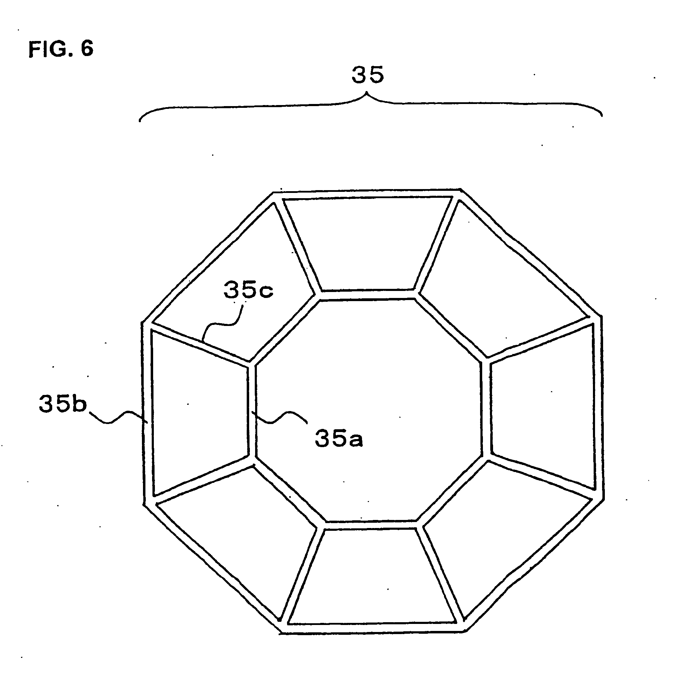

In FIG. 6, the energy absorber 35 is a hollow extruded shape member having an octagonal cross-section formed of a material having superior shock absorbing property, such as an A6063S-T5. The direction of extrusion of the hollow extruded shape member corresponds to the direction of operation of the impact load. Thedirectionofoperationof the impact load, that is, the running direction, is from left to right in the drawing of FIG. 5. A hole 35d is formed to pass through in the direction of operation of the impact load at the center of the octagonal cross-section. The energy absorber 35 has its front end covered with a closing plate 42, its rear end covered with a closing plate 43, and attached to the front and rear closing plates 42 and 43. A hole 35d is formed at the center of the closing plates 42 and 43 and the energy absorber 35, and a load transmitting shaft 44 is passed through the inner side of closing plates 42 and 43 and the hole 35d. The load transmitting shaft 44 has a circular cross-section. The term "front end" refers to the left side of FIG. 5, and the term "rear end" refers to the right side of FIG. 5. In FIG. 6, the load transmitting shaft 44 is not shown.

The energy absorber 35 is composed of an inner cylinder 35a having an octagonal cross-section disposed at the inner side, an outer cylinder 35b having an octagonal cross-section disposed at the outer side, and a plurality of connecting plates 35c connecting the inner and outer cylinders. The connecting plates 35c are attached to intersecting points of the octagons in the form of a truss.

The closing plate 42 disposed at the front end of the energy absorber 35 is opposed to the rear end of the supporting member 47 via a gap G of 8.5 mm, for example. The closing plate 43 at the rear end of the energy absorber 35 is engaged via bolts and nuts 46 to the rod 37. The load transmitting shaft 44 attached to the front end of the rod 37 is connected via a pin 48 to the supporting member 47 at the front end portion penetrated through the hole 35d and protruded from the closing plate 42.

The pin 48 is passed through a hole 44c formed to the load transmitting rod 44 and the hole 47c formed to the supporting member 47. Notched grooves 48c are formed to the outer surface of the pin 48 between the side surface of the load transmitting shaft 44 facing the outer side of the width direction of the car body and the side surface of the supporting member 47 facing the inner side of the width direction of the car body, and the notched grooves 48c enable the pin 48 to break easily by impact load. In other words, the notched grooves 48c formed on the outer circumference of the pin 48 between the load transmitting shaft 44 and the supporting member 47 are formed so as to enable the pin to break easily when impact load is applied to the support member 47, enabling the supporting member 47 to collide against the closing plate 42 by the impact load. A hole 33b is formed on the opposing side of the distribution member 33 to allow the load transmitting shaft 44 to pass therethrough when the pin 48 breaks when the distance between the front end of the load transmitting shaft 44 and the rear end of the distribution member 33 is short.

The support members 47 and 47 are attached to the distribution member 33. Each support member 47 has a substantially same outer shape as the energy absorber 35. That is, the energy absorber 35 has an octagonal cross-section, and the support member 47 also has an octagonal cross-section. If the support member 47 is a hollow shape member, a closing plate (not shown) is attached to the rear end thereof.

As described, the rear end of the support member 47 is opposed via a gap G to a closing plate 42. According to such structure, the function of the energy absorber 35 can be turned on and off according to the level of impact load.

In other words, when a small load is applied on the obstacle deflection member 31, the front end of the energy absorber 35 is opposed to the support member 47 with a gap G therebetween, so the impact load is not applied on the energy absorber 35. This state is referred to as "off".

On the other hand, when a large load is applied on the obstacle deflection member 31, the impact load is applied via the obstacle deflection member 31, the pin 34, the distribution member 33 and the support members 47 to pins 48 and load transmitting shafts 44. Thereby, the pins 48 break and the support members 47 collide against the energy absorbers 35. This state in which the pins 48 are broken is referred to as "on". In other words, the rear end portion of the support members 47 collide against the closing plates 42, by which the impact load is transmitted to the energy absorbers 35, making the energy absorbers 35 collapse in a bellows with respect to the direction of operation of the impact load. The collision energy is absorbed by this collapse.

As described, since the operation of impact load to the energy absorbers 35 is turned on and off, it becomes possible to prevent replacement of the energy absorbers 35 when only a small load is applied thereto, and to prevent the occurrence of lack of function of the energy absorbers 35 when a large load is applied thereto.

Furthermore, the obstacle deflection member 31, the rods 37 and the underframe 3 are respectively connected via pins 32 and 38, by which a link mechanism is composed. Thus, even when an obstacle collides against the obstacle deflection member 31, only a load in the axial direction (substantially a compressive load) connecting the pin 34 and the pin 38 in FIG. 2 is applied to the connecting mechanism 40 composed of the distribution member 33, the support members 47, the load transmitting shafts 44, the energy absorbers 35 and the rods 37 connecting the pin 34 and the pins 38, and no flexural load (moment) is applied. Therefore, no flexural load is applied to the underframe 3 via the rods 37. Thus, only a simple tensile and compressive load is applied to the underframe 3, and so there is no need to enhance the strength excessively.

Furthermore, the above-described link mechanism enables only simple compressive load to be applied to the energy absorbers 35, so the energy absorbers 35 can be collapsed in a straight direction without fail to absorb the collision energy efficiently. Thus, there is no need to add any extra structure such as a guide mechanism for guiding the energy absorbers 35 to be collapsed in a straight direction. In replacement of the link mechanism, it is possible to arrange energy absorbers 35 horizontally between the obstacle deflection member 31 and the underframe 3, but in order to enable the energy absorbers 35 to be collapsed in the correct horizontal direction, a guide mechanism must be provided between the underframe 3 to enable the energy absorbers 35 to slide in the horizontal direction. As described in the present embodiment, the guide mechanism is no longer necessary when a link mechanism using pins 32, 34 and 38 is adopted, and the structure of the obstacle deflector can be simplified.

Furthermore, the distribution member 33 and the obstacle deflection member 31 are connected at the center portion in the width direction via a pin 34. Moreover, since the energy absorbers 35 and 35 are attached to the distribution member 33 at equal distances from the pin 34, load is applied uniformly to the absorbers 35 and 35 and rods 37 and 37. Thereby, regardless of the width-direction position in which the obstacle collides against the obstacle deflection member 31, the impact load is transmitted via the pin 34 to the distribution member 33, and load is transmitted uniformly to the energy absorbers 35 and 35 positioned at equal distances from the pin 34.

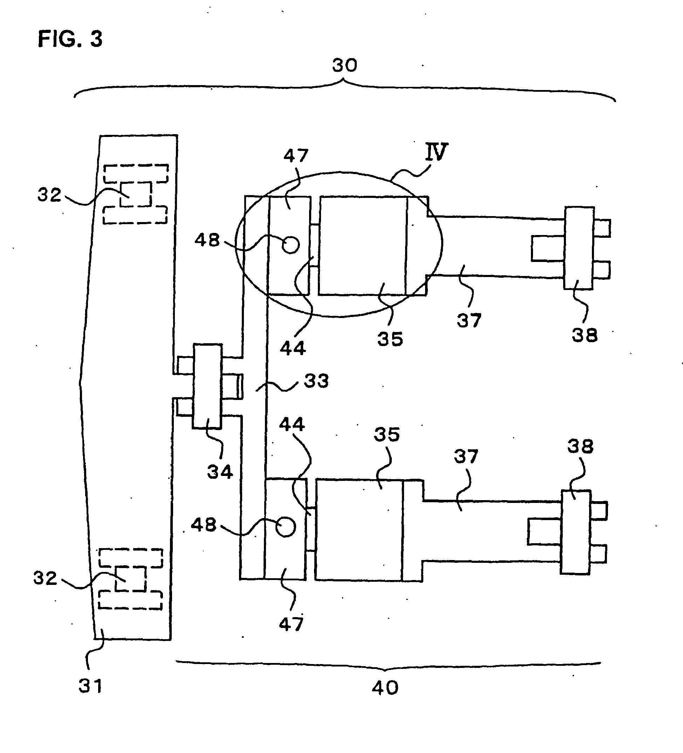

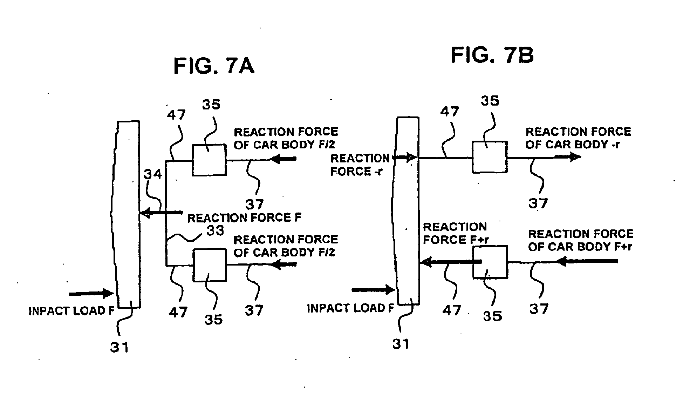

This is described in further detail with reference to FIG. 7. FIG. 7 illustrates the impact load F applied to the obstacle deflector and the reaction force thereof. FIG. 7A is an explanatory view showing the load and the reaction force corresponding to FIG. 3 of the present invention. FIG. 7B is an explanatory view showing an assumed prior art example.

FIG. 7A illustrates a case in which an obstacle collides against one end of the obstacle deflection member 31. The impact load F applied to the obstacle deflection member 31 is applied via the distribution member 33 to the energy absorbers 35. Since the impact load F applied to the obstacle deflection member 31 is applied to the distribution member 33 via the pin 34, the impact load F is applied as it is to the distribution member 33 regardless of where in the width direction the obstacle collides against the obstacle deflection member 31, and the distance from where the obstacle collides to the pin 34 is not relevant. Further, the distances from the pin 34 to the absorbers 35 and 35 (that is, to the connecting points between the distribution member 33 and the support members 47 and 47) are equal. Therefore, the reaction force caused to each absorber is one-half the impact load F.

FIG. 7B illustrates a case in which the support members 47 are directly connected to the obstacle deflection member 31 (or a case in which the obstacle deflection member 31 and the distribution member 33 are connected via multiple pins). When an obstacle collides against one end of the obstacle deflection member 31, a reaction force in the direction opposite to the impact load is generated to one of the two support members 47 and 47 (or one of the two energy absorbers 35 and 35) disposed closer to where the collision with the obstacle occurred, and according to the principle of leverage, a reaction force r in the same direction as the impact load F occurs to the other support member 47 (the other energy absorber 35). As a result, a reaction force of F+r is generated to the support member 47 (energy absorber 35) closer to where the obstacle collided, and the load applied to the support member 47, the energy absorber 35, the rod 37 and the underframe 3 is increased.

According to the present invention (having the structure illustrated in FIG. 7A), no such phenomenon as illustrated in FIG. 7B occurs in which great reaction force is applied to the support member 47 closer to the point of collision, and so the two energy absorbers 35 and 35 can absorb impact load uniformly, thereby the overall structure can be reduced in size. Further, the load applied to the car body can be minimized.

Moreover, according to the present structure, even when a large load is applied, the obstacle deflector 30 can be replaced with a new one by replacing the energy absorbers 35, the bolts and nuts 46 and the pins 48.

Moreover, it is also possible to adopt a structure in which the support members 47 also collapse to absorb the collision energy when a large load is applied.

### [Embodiment 2]

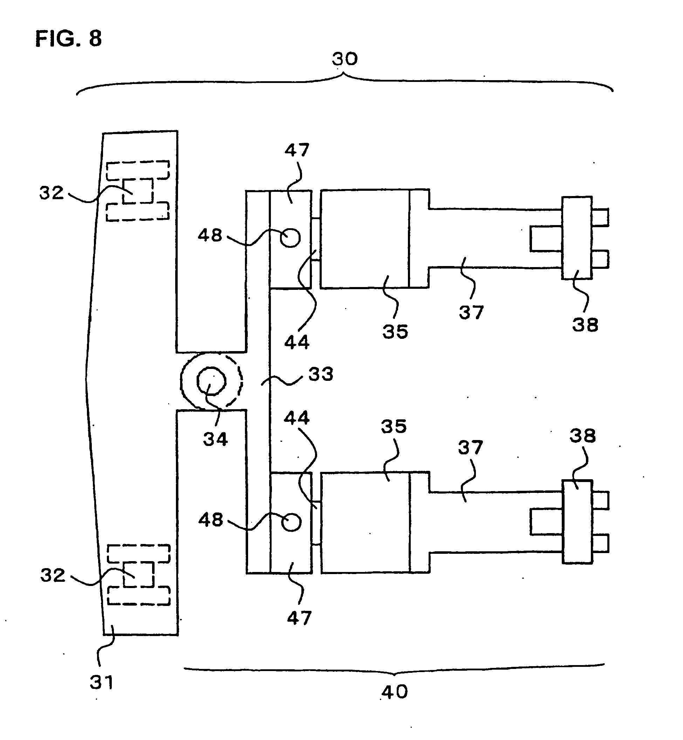

According to embodiment 1 illustrated in FIG. 3 described above, the pin 34 connecting the obstacle deflection member 31 and the distribution member 33 is arranged so that its axial direction is disposed in the horizontal direction, but in embodiment 2, the pin 34 is arranged in the perpendicular direction, as illustrated in FIG. 8.

When the pin 34 is arranged perpendicularly, there is a risk that when the energy absorbers 35 collapse, the absorbers are deformed in an upward curved state, by which the energy absorption efficiency is deteriorated. However, by arranging the pin 34 in the perpendicular direction, the impact load can be distributed more uniformly in the left and right directions, that is, to the two energy absorbers 35 and 35, compared to the case of embodiment 1.

### [Embodiment 3]

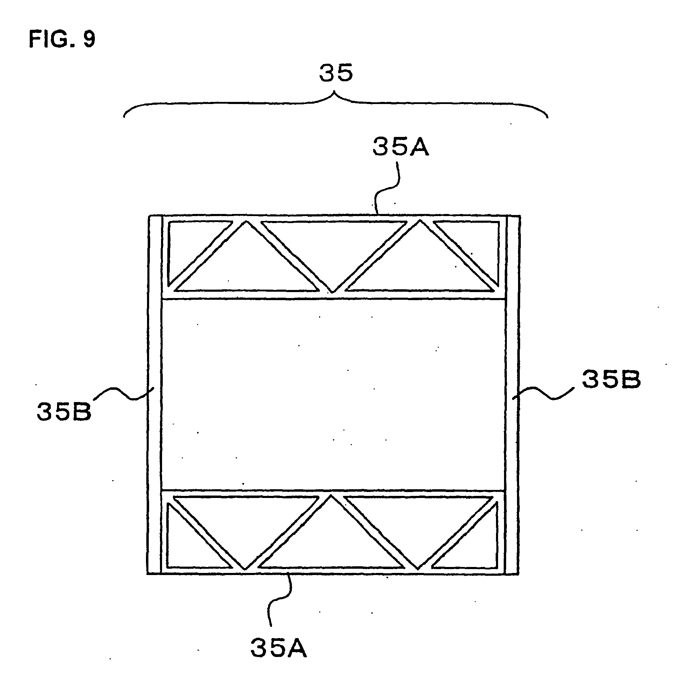

According to embodiment 1, each energy absorber 35 is composed of a hollow shape member having an octagonal cross-sectional shape, but as illustrated in FIG. 9, it can also be composed of two flat hollow shape members 35A and 35A and two connecting plates 35B and 35B connecting the width-direction ends of the hollow shape members 35A and 35A. The connecting plate 35B is connected to the end portion of the hollow shape member 35A. The space between the upper hollow shape member 35A and the lower hollow shape member 35A is for arranging the load transmitting shaft 44.

Though the width direction of the hollow shape member 35A is arranged horizontally, it can also be arranged perpendicularly. Further, the member does not necessarily have to be hollow.

## Claims

1. A railway car having an obstacle deflector (30) disposed on a lower surface (3b) of an underframe (3) of the railway car, wherein
the obstacle deflector (30) is supported on the lower surface of the underframe at two locations spaced apart from one another in a running direction of the railway car when viewed in a side direction with respect to the running direction;
the obstacle deflector (30) comprises an obstacle deflection member (31) that is to collide against an obstacle, a first pin (32) positioned at one of said two locations and rotatably connecting the obstacle deflection member to the lower surface of the underframe, and a second pin (38) positioned at the other one of said two locations;
wherein the first pin (32) and the second pin (38) have axes oriented horizontally in a width direction with respect to the running direction of the railway car,
**characterized in that** a connecting mechanism (40) connects the obstacle deflection member and the underframe, the second pin rotatably connects the connecting mechanism to the lower surface of the underframe, and a third pin (34) connects the obstacle deflection member and the connecting mechanism; and
the connecting mechanism comprises a distribution member (33), andtwoparallelconnectingunits (35, 37, 44, 47) connected to the distribution member (33) and disposed in the running direction;
the obstacle deflection member (31) and the distribution member (33) are connected via the third pin (34);
the distribution member (33) is disposed along the width direction; and
the third pin (34) is disposed at a position corresponding to the center position in the width direction of the two connecting units.

2. The railway car according to claim 1, wherein
there are two said second pins (38) disposed to correspond to the two connecting units respectively; and
the two connecting units are respectively connected to the corresponding second pin (38).

3. The railway car according to claim 1 or 2, wherein
a lower end portion of the obstacle deflection member (31) is disposed on a line of extension connecting the second pin (38) and the third pin (34) when viewed in said side direction.

4. The railway car according to claim 1, wherein
the axis line of the third pin (34) connecting the distribution member and the obstacle deflection member is disposed in the perpendicular direction.

5. The railway car according to any one of claims 1 to 4, wherein
each connecting unit comprises an energy absorber (35) for absorbing collision energy by collapsing when the obstacle deflection member (31) collides against an obstacle.

6. The railway car according to claim 5, wherein
the front end of each of the energy absorbers (35) is opposed via a gap to a support member (47) of the connecting unit connected to the distribution member (33);
a load transmitting shaft (44) is connected to a rod (37) attached to a rear end of each energy absorber (35);
the load transmitting shaft (44) is protruded toward the direction for receiving the collision energy and passes through an interior of the energy absorber (35); and
a front end portion of the load transmitting shaft (44) is connected to the support member (47) via a fourth pin (48).

7. The railway car according to any one of claims 1 to 6, wherein
the obstacle deflection member (31) is disposed at a leading portion of the railway car, and the connecting mechanism (40) is arranged above an axle of wheels of the railway car.

## Patentansprüche

1. Eisenbahnwaggon mit einer Hindernis-Ablenkeinrichtung (30), die auf einer unteren Oberfläche (3b) eines Unterrahmens (3) des Eisenbahnwaggons angeordnet ist, wobei
die Hindernis-Ablenkeinrichtung (30) auf der unteren Oberfläche des Unterrahmens an zwei in einem Abstand zueinander in einer Laufrichtung des Eisenbahnwaggons angeordneten Stellen, betrachtet in einer Seitenrichtung bezüglich der Laufrichtung, gehalten wird;
die Hindernis-Ablenkeinrichtung (30) ein Hindernis-Ablenkelement (31), das mit einem Hindernis kollidieren soll, einen an einer der zwei Stellen angeordneten und das Hindernis-Ablenkelement mit der unteren Oberfläche des Unterrahmens rotierbar verbindenden ersten Festpunkt (32) und einen an der anderen der zwei Stellen angeordneten zweiten Festpunkt (38) umfasst;
wobei der erste Festpunkt (32) und der zweite Festpunkt (38) horizontal in einer Breitenrichtung bezüglich der Laufrichtung des Eisenbahnwaggons orientierte Achsen aufweisen,
**gekennzeichnet dadurch, dass** ein Verbindungsmechanismus (40) das Hindernis-Ablenkelement und den Unterrahmen verbindet, wobei der zweite Festpunkt den Verbindungsmechanismus mit der unteren Oberfläche des Unterrahmens rotierbar verbindet und ein dritter Festpunkt (34) das Hindernis--Ablenkelement und den Verbindungsmechanismus verbindet; und
der Verbindungsmechanismus ein Verteilungselement (33) und zwei mit dem Verteilungselement (33) verbundene und in der Laufrichtung angeordnete parallele Verbindungseinheiten (35, 37, 44, 47) umfasst;
das Hindernis-Ablenkelement (31) und das Verbindungselement (33) über den dritten Festpunkt (34) verbunden sind;
das Verteilungselement (33) entlang der Breitenrichtung angeordnet ist; und
der dritte Festpunkt (34) an einer Stelle angeordnet ist, die der Mittelpunktstelle in der Breitenrichtung der zwei Verbindungselemente entspricht.

2. Eisenbahnwaggon nach Anspruch 1, wobei
zwei zweite Festpunkte (38) vorgesehen sind, die so angeordnet sind, dass sie jeweils den zwei Verbindungseinheiten entsprechen; und
die zwei Verbindungseinheiten jeweils mit dem entsprechenden zweiten Festpunkt (38) verbunden sind.

3. Eisenbahnwaggon nach Anspruch 1 oder 2, wobei
ein unterer Endabschnitt des Hindernis-Ablenkelements (31), in der Seitenrichtung betrachtet, auf einer Verlängerungslinie angeordnet ist, die den zweiten Festpunkt (38) und den dritten Festpunkt (34) verbindet.

4. Eisenbahnwaggon nach Anspruch 1, wobei
die das Verteilungselement und das Hindernis-Ablenkelement verbindende Achslinie des dritten Festpunkts (34) in der senkrechten Richtung angeordnet ist.

5. Eisenbahnwaggon nach einem der Ansprüche 1 bis 4, wobei
jede Verbindungseinheit eine Energie-Absorptionseinrichtung (35) zum Absorbieren von Kollisionsenergie durch Kollabieren, wenn das Hindernis-Ablenkelement (31) mit einem Hindernis kollidiert, umfasst.

6. Eisenbahnwaggon nach Anspruch 5, wobei
das vordere Ende jeder der Energie-Absorptionseinrichtungen (35) über eine Lücke hinweg einem Halteelement (47) der mit dem Verteilungselement (33) verbundenen Verbindungseinheit gegenüber liegt;
eine Lastübertragungswelle (44) mit einer an einem hinteren Ende jeder Energie-Absorptionseinrichtung (35) angebrachten Stange (37) verbunden ist;
die Lastübertragungswelle (44) in der Richtung zum Empfangen der Kollisionsenergie hervorragt und durch ein Inneres der Energie-Absorptionseinrichtung (35) hindurchläuft; und
ein vorderer Endabschnitt der Lastübertragungswelle (44) mit dem Halteelement (47) über einen vierten Festpunkt (48) verbunden ist.

7. Eisenbahnwaggon nach einem der Ansprüche 1 bis 6, wobei
das Hindernis-Ablenkelement (31) an einem Führungsabschnitt des Eisenbahnwaggons angeordnet ist und der Verbindungsmechanismus (40) oberhalb einer Radachse des Eisenbahnwaggons eingerichtet ist.

## Revendications

1. Véhicule ferroviaire ayant un déflecteur d'obstacles (30) disposé sur une surface inférieure (3b) d'un sous-châssis (3) du véhicule ferroviaire, dans lequel
le déflecteur d'obstacles (30) est supporté sur la surface inférieure du sous-châssis à deux emplacements espacés l'un de l'autre dans une direction de déplacement du véhicule ferroviaire lorsque observé dans une direction latérale par rapport à la direction de déplacement,
le déflecteur d'obstacles (30) comporte un élément de déviation d'obstacles (31) qui doit entrer en collision avec un obstacle, une première goupille (32) positionnée à l'un desdits deux emplacements et reliant en rotation l'élément de déviation d'obstacles à la surface inférieure du sous-châssis, et une seconde goupille (38) positionnée à l'autre emplacement desdits deux emplacements,
dans lequel la première goupille (32) et la seconde goupille (38) ont des axes orientés horizontalement dans une direction de largeur par rapport à la direction de déplacement du véhicule ferroviaire,
**caractérisé en ce que** un mécanisme de connexion (40) relie l'élément de détection d'obstacles et le sous-châssis, la deuxième goupille relie en rotation le mécanisme de connexion à la surface inférieure du sous-châssis, et une troisième goupille (34) relie l'élément de déviation d'obstacles et le mécanisme de connexion, et
le mécanisme de connexion comporte un élément de distribution (33), et deux unités de connexion parallèles (35, 37, 44, 47) reliées à l'élément de distribution (33) et disposées dans la direction de déplacement,
l'élément de déviation d'obstacles (31) et l'élément de distribution (33) sont reliés via la troisième goupille (34),
l'élément de distribution (33) est disposé selon la direction de largeur, et
la troisième goupille (34) est disposée à une position correspondant à la position de centre dans la direction de largeur des deux unités de connexion.

2. Véhicule ferroviaire selon la revendication 1, dans lequel deux desdites deuxièmes goupilles (38) sont disposées pour correspondre aux deux unités de connexion respectivement, et
les deux unités de connexion sont respectivement reliées à la seconde goupille correspondante (38).

3. Véhicule ferroviaire selon la revendication 1 ou 2, dans lequel une partie d'extrémité inférieure de l'élément de déviation d'obstacles (31) est disposée sur une ligne de prolongement reliant la deuxième goupille (38) et la troisième goupille (34) lorsque observée dans ladite direction latérale.

4. Véhicule ferroviaire selon la revendication 1, dans lequel la ligne d'axe de la troisième goupille (34) reliant l'élément de distribution et l'élément de déviation d'obstacles est disposée dans la direction perpendiculaire.

5. Véhicule ferroviaire selon l'une quelconque des revendications 1 à 4, dans lequel
chaque unité de connexion comporte un absorbeur d'énergie (35) pour absorber l'énergie de collision en s'écrasant lorsque l'élément de déviation d'obstacles (31) entre en collision avec un obstacle.

6. Véhicule ferroviaire selon la revendication 5, dans lequel l'extrémité avant de chacun des absorbeurs d'énergie (35) est opposée via un entrefer à un élément de support (47) de l'unité de connexion reliée à l'élément de distribution (33),
un arbre de transmission de charge (44) est relié à une tige (37) fixée à une extrémité arrière de chaque absorbeur d'énergie (35),
l'arbre de transmission de charge (44) fait saillie dans la direction de réception de l'énergie de collision et traverse l'intérieur de l'absorbeur d'énergie (35), et
une partie d'extrémité avant de l'arbre de transmission de charge (44) est reliée à l'élément de support (47) via une quatrième goupille (48).

7. Véhicule ferroviaire selon l'une quelconque des revendications 1 à 6, dans lequel
l'élément de déviation d'obstacles (31) est disposé au niveau d'une partie de tête du wagon, et le mécanisme de connexion (40) est agencé au-dessus d'un essieu de roues du véhicule ferroviaire.
